# EUROPÄISCHE PATENTSCHRIFT

(11) **EP 2 734 564 B1**
(45) Veröffentlichungstag und Bekanntmachung des Hinweises auf die Patenterteilung: **09.09.2020**
(21) Anmeldenummer: 12740538.9
(22) Anmeldetag: 16.07.2012
(51) Int. Cl.: C08G 18/09, C08G 18/40, C08G 18/42

(54) **VERSPRÜHBARER, WASSERGETRIEBENER PUR-/PIR-HARTSCHAUMSTOFF**
WATER-BLOWN PUR/PIR RIGID FOAM MATERIAL THAT CAN BE SPRAYED
MOUSSE RIGIDE PUR/PIR PULVÉRISABLE, MOUSSÉE À L'EAU

(30) Priorität: 18.07.2011 DE 102011079336
(43) Veröffentlichungstag der Anmeldung: 28.05.2014
(73) Patentinhaber: Covestro Deutschland AG, 51373 Leverkusen (DE)
(72) Erfinder: ALBERS, Reinhard, 51375 Leverkusen (DE); KLASEN, Patrick, 52391 Vettweiß (DE); SCHNEIDER, Horst-Heinrich, 50735 Köln (DE); VOGEL, Stephanie, 40764 Langenfeld (DE)
(74) Vertreter: Levpat
(86) Internationale Anmeldenummer: PCT/EP2012/063903
(87) Internationale Veröffentlichungsnummer: WO 2013/010988

(56) Entgegenhaltungen:
- EP-A1- 1 149 849
- EP-A1- 1 167 414
- WO-A1-2010/066635
- WO-A2-2010/024886
- DE-A1- 19 623 065

## Beschreibung

Die vorliegende Erfindung betrifft ein Verfahren zur Herstellung eines Polyurethan-Polyisocyanurat-Hartschaumstoffs durch Reaktion einer Mischung umfassend ein aromatisches Polyesterpolyol, ein erstes, vergleichsweise kurzkettiges aliphatisches Polyetherpolyol, ein zweites, vergleichsweise langkettiges aliphatisches Polyetherpolyol, einer Isocyanatkomponente, einer Treibmittelkomponente mit Wasser mindestens als Hauptanteil sowie einer Katalysatorkomponente. Sie betrifft weiterhin einen nach dem erfindungsgemäßen Verfahren hergestellten Hartschaum, ein Verbundmaterial aus diesem Hartschaum und einem Rohr sowie die Verwendung eines solchen Verbundmaterials zum Transport flüssiger oder gasförmiger Medien.

In der Öl- und Gasindustrie werden sprühfähige Polyurethansysteme zur Isolierung von Rohren eingesetzt. Die so hergestellten PUR-/PIR-Hartschaumstoffe müssen strenge Anforderungen hinsichtlich Haftung, Druckfestigkeit und Emission bei gleichzeitig hervorragenden Isoliereigenschaften erfüllen. Es ist nicht auszuschließen, dass während des Sprühvorgangs von Polyurethanschäumen die eingesetzten physikalischen Treibmittel auch bedingt an die Umwelt abgegeben werden. Des Weiteren ist der Einsatz von physikalischen Treibmitteln hinsichtlich ihrer ODP- und GWP-Einstufung gesetzlich geregelt und somit nicht in allen Ländern gleichermaßen möglich. Dies trifft auf den Einsatz von Wasser als Treibmittel nicht zu.

Sprühsysteme sollten generell eine extrem kurze Abbindezeit besitzen, um ein übermäßiges Abtropfen oder Verfließen zu vermeiden. Dies wird durch entsprechend hohen Einsatz von Katalysatoren und Vernetzern erreicht. Allerdings besteht beim Einsatz von zu großen Mengen an Katalysator und Vernetzer die Gefahr der Versprödung. Solche Schäume würden eine sandige Oberfläche und Verbundmaterialen damit sehr schlechte Haftfestigkeiten an beispielsweise Stahlrohren besitzen. Von wassergetriebenen PUR-/PIR-Hartschaumstoffen ist generell bekannt, dass aufgrund des sehr hohen Anteils an gebildetem Harnstoff mit einer spröderen Schaumstruktur zu rechnen ist als bei physikalisch getriebenen Hartschaumstoffen. Des Weiteren besitzen PUR-/PIR-Hartschaumstoffe aufgrund der höheren Wärmeleitfähigkeit von CO₂ eine schlechtere Isoliereigenschaft und neigen verstärkt zum Schrumpf.

Zur Zeit werden überwiegend Polyurethanhartschaumstoffe über Sprühverfahren hergestellt. Es gibt nur wenige PIR-Sprühsysteme und noch weniger solche, die Wasser als Treibmittel verwenden. Die existierenden wassergetriebenen Systeme verwenden auf der Polyolseite ausschließlich Polyetherpolyole. Der Grund hierfür liegt in der zunehmenden Sprödigkeit des PUR-/PIR-Schaumes bei der Verwendung von Polyesterpolyolen. Dies gilt insbesondere für aromatische Polyesterpolyole. All die zuvor genannten Bedingungen führen zu einer zunehmenden Versprödung und damit zu schlechten Haftungseigenschaften solcher PUR-/PIR-Hartschaumstoffe.

Die heutzutage angewandte, übliche Vorgehensweise, einer solchen Sprödigkeit und schlechten Haftung von PUR-/PIR-Hartschaumstoffen entgegenzuwirken, ist, die Temperatur der Trägers, an dem der Schaum haften soll, zu erhöhen, den Wasseranteil in der Formulierung zu reduzieren, während gleichzeitig der Anteil des physikalischen Treibmittels erhöht wird, den Anteil des PIR-Katalysators zu erhöhen und/oder Polyole mit relativ hohem Molekulargewicht auf der Polyolseite oder vorpolymerisiert in Form von NCO-Präpolymeren einzusetzen.

EP 1 632 511 A1 betrifft PUR-/PIR-Hartschaumstoffe, erhältlich durch Umsetzung einer organischen Polyisocyanatkomponente mit einer Verbindungen mit gegenüber Isocyanatgruppen reaktive Wasserstoffatome enthaltenden Polyolkomponente bei einem Index von 100 bis 400, besonders bevorzugt 180 bis 400, z.B. für die Herstellung von PUR-/PIR-Hartschaumstoffen für Laminate, in Gegenwart geeigneter Hilfs- und Zusatzstoffe sowie Treibmittel und Co-Treibmittel, wobei die Polyolkomponente mindestens ein aliphatisches Polyesterpolyol enthält, das neben von Adipinsäure abgeleiteten Baueinheiten auch solche Baueinheiten enthält, die von Glutarsäure, Bernsteinsäure oder Sebacinsäure abgeleitet sind.

WO 2004/060950 A1 offenbart einen geschlossenzelligen Schaum, der aus einer Mischung umfassend eine Polyolkomponente mit einem aromatischen Polyesterpolyol einer OH-Funktionalität von wenigstens 2, einem Polyisocyanat in einer Menge, dass der Index weniger als 350 beträgt und eine Wasser umfassende Treibmittelkomponente umfasst. Der Schaum weist Zellen auf, welche einen mittleren Durchmesser von ungefähr 160 Mikrometer haben (Rasterelektronenmikroskop-Messung) und der Isolationswert R des gealterten Schaums ist wenigstens 4,5 R/Zoll.

EP 0 698 422 A1 beschreibt ein Verfahren zur Isolierung von Rohren nach dem Verbundprinzip, wobei auf ein Stahlrohr mindestens eine Schicht eines Polyisocyanuratkunststoffs und anschließend mindestens eine Schicht des Polyurethanhartschaumstoffes aufgebracht wird, der dann eine Deckschicht folgt.

Eine Prepolymer-Route ist Gegenstand von WO 02/40566 A2. Ein Verfahren zur Herstellung eines polyurethanmodifizierten Polyisocyanuratschaums umfasst die Reaktion einer wenigstens bifunktionellen Verbindung mit aktiven Wasserstoffatomen mit einer Polyisocyanatverbindung in Gegenwart eines Katalysators und eines Treibmittels umfassend Wasser alleine oder eine Mischung von Wasser mit einem niedrigsiedenden Treibmittel, wobei (1) die Polyisocyanatverbindung ein 30 Gewichts-%, bezogen auf das polymere MDI, ist und (2) der NCO-Index mindestens 150 beträgt.

Ein weiteres Beispiel für einen wassergetrieben PIR-Sprühschaum mit einem speziellen Polyetherpolyol findet sich in JP 2005-206819 A1. JP 2000-327741 A1 behandelt ebenfalls den Einsatz eines speziellen Polyetherpolyols. Das Dokument EP 1 167 414 A1 bezieht sich auf PUR-PIR-Hartschäume. In den Beispielen 2-4 werden PUR-PIR-Hartschäume beschrieben. Die Bespiele Ref. Ex, Ex.D-L (Tabelle 3, 5 und 7) zeigen Zusammensetzungen, die ein aromatisches Polyesterpolyol mit OH-Zahl 240 mgKOH/g (Polyol 8 "Stepanpol 2352), zwei Polyetherpolyole (Polyole 1 und 4), ein Katalysator zur Katalyse der PUR-Bildung (SFC oder SFB), ein Katalysator zur Katalyse der PIR-Bildung (Dabco K15), Wasser als Treibmittel enthalten.

Aus dem Vorangegangenen wird deutlich, dass weiterhin der Bedarf an verbesserten sprühbaren PUR-/PIR-Schäumen besteht. Die vorliegende Erfindung hat sich daher die Aufgabe gestellt, wassergetriebene PUR-/PIR-Hartschäume bereitzustellen, um während des Sprühvorgangs die Emission von flüchtigen, brennbaren und gegebenenfalls umweltbelastenden physikalischen Treibmitteln zu vermeiden. Das System sollte mit dem Stand der Technik mindestens vergleichbare Haftfestigkeiten auf Stahlrohren besitzen und somit zur Rohrherstellung für die Öl- und Gasindustrie eingesetzt werden können.

Diese Aufgabe wird erfindungsgemäß gelöst durch ein Verfahren zur Herstellung eines Polyurethan-Polyisocyanurat-Hartschaumstoffs **C** aus einer Isocyanat-reaktiven Zusammensetzung **A** und einer Isocyanatkomponente **B,** wobei die Isocyanat-reaktive Zusammensetzung **A** umfasst:
(i) ein aromatisches Polyesterpolyol **A1** mit einer Hydroxylzahl von ≥ 100 mg KOH/g bis ≤ 350 mg KOH/g, einer durchschnittlichen OH-Funktionalität von ≥ 1,8 bis ≤ 6,5,
(ii) ein aliphatisches Polyetherpolyol **A2a** mit einer Hydroxylzahl von ≥ 150 mg KOH/g bis ≤ 500 mg KOH/g, einer durchschnittlichen OH-Funktionalität von ≥ 1,5 bis ≤ 5,5 und einem Ethylenoxid-Gehalt von ≥ 0 Massen-% bis ≤ 50 Massen-%, bezogen auf die Gesamtmasse von **A2a** und
   ein weiteres aliphatisches Polyetherpolyol **A2b** mit einer Hydroxylzahl von ≥15 mg KOH/g bis ≤ 150 mg KOH/g, einer durchschnittlichen OH-Funktionalität von ≥ 1,5 bis ≤ 5,5 und einem Ethylenoxid-Gehalt von ≥ 0 Massen-% bis ≤ 50 Massen-%, bezogen auf die Gesamtmasse von **A2b**,
(iii) eine Treibmittelkomponente **A3** umfassend Wasser in einem Anteil von ≥ 90 Massen-% bis ≤ 100 Massen-%, bezogen auf die Gesamtmasse von **A3**, und
(iv) eine Katalysatorkomponente **A4** umfassend einen Katalysator **A4a** zur Katalyse der Polyurethanbildung und einen Katalysator **A4b** zur Katalyse der Polyisocyanuratbildung, mit einem Anteil des Katalysators **A4a** von ≥ 5 Massen-% bis ≤ 50 Massen-% und einem Anteil von Katalysator **A4b** von ≥ 50 Massen-% bis ≤ 95 Massen-% bezogen auf die Gesamtmasse von **A4**, und
(v) einen Kettenverlängerer oder Vernetzer **A5** mit einer durchschnittlichen Funktionalität von ≥ 2 bis ≤ 4 und einer Hydroxylzahl von ≥ 600 mg KOH/g bis ≤ 2000 mg KOH/g.

Es wurde nun überraschenderweise gefunden, dass sich nach konventioneller Vorgehensweise durch die entsprechende Kombination von lang- und kurzkettigen Polyether- und Polyesterpolyolen mit einem geeigneten Katalysepaket wassergetriebene PUR-/PIR-Hartschaumstoffe mit hervorragenden Haftungs- und Isoliereigenschaften nach dem Sprühverfahren herstellen lassen. Dies ist umso überraschender, da dies der zuvor genannten, bis heute üblichen Vorgehensweise vollständig widerspricht.

Nachfolgend wird zunächst auf die eingesetzten Polyole näher eingegangen. Alle genannten Hydroxylzahlen lassen sich gemäß DIN 53240 bestimmen.

Beispiele für aromatische Polyesterpolyole **A1a** sind Polykondensate aus Di- sowie weiterhin Tri-, und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden. Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden. Bevorzugt werden Ethylenglykol und Diethylenglykol eingesetzt.

Als Polycarbonsäuren können beispielsweise Bernsteinsäure, Fumarsäure, Maleinsäure, Maleinsäureanhydrid, Glutarsäure, Adipinsäure, Sebacinsäure, 1,10-Decandicarbonsäure, 1,12-Dodecandicarbonsäure, Phthalsäure, Phthalsäureanhydrid, Isophthalsäure, Terephthalsäure, Pyromellitsäure, Trimellitsäure oder eingesetzt werden. Bevorzugt werden Adipinsäure und Phthalsäureanhydrid eingesetzt.

Sofern die mittlere Funktionalität des zu veresternden Polyols ≥ 2 ist, können zusätzlich auch Monocarbonsäuren wie Benzoesäure und Hexancarbonsäure mit verwendet werden.

Es ist bevorzugt, dass das aromatische Polyesterpolyol **A1a** eine Hydroxylzahl von ≥ 150 mg KOH/g bis ≤ 340 mg KOH/g (mehr bevorzugt ≥ 220 mg KOH/g bis ≤ 260 mg KOH/g) und eine durchschnittliche OH-Funktionalität von ≥ 1,8 bis ≤ 3,0 aufweist. Die Säurezahl liegt vorzugsweise in einem Bereich von ≥ 0,1 mg KOH/g bis ≤ 5,0 mg KOH/g.

Durch die erfindungsgemäß ausgewählten Hydroxylzahlen lässt sich das aromatische Polyesterpolyol **A1a** als vergleichsweise kurzkettiges Polyol mit einer mittleren Molmasse von ≥

Durch die erfindungsgemäß ausgewählten Hydroxylzahlen lässt sich das aromatische Polyesterpolyol **A1a** als vergleichsweise kurzkettiges Polyol mit einer mittleren Molmasse von ≥ 200 g/mol bis ≤ 2000 g/mol, bevorzugt von ≥ 300 g/mol bis ≤ 1500 g/mol, besonders bevorzugt von ≥ 330 g/mol bis ≤ 800 g/mol charakterisieren.

Ein bevorzugtes aromatisches Polyesterpolyol **A1a** ist ein Polykondensationsprodukt aus Adipinsäure, Phthalsäureanhydrid, Diethylenglykol und/oder Ethylenglykol. Besonders bevorzugt sind die folgenden Gewichtsanteile der Edukte im Reaktionsgemisch:
Adipinsäure: ≥ 7 Gewichts-% bis ≤ 13 Gewichts-%;
Phthalsäureanhydrid: ≥ 37 Gewichts-% bis ≤ 45 Gewichts-%;
Diethylenglykol: ≥ 35 Gewichts-% bis ≤ 43 Gewichts-%; und
Ethylenglykol: ≥ 9 Gewichts-% bis ≤ 15 Gewichts-%;
wobei sich die Summe der Angaben abzüglich des bei der Polykondensationsreaktion gebildeten Wassers in Gewichts-% zu ≤ 100 Gewichts-% addieren.

Verwendbare aliphatische Polyetherpolyole **A2a** sind beispielsweise Polytetramethylenglykolpolyether, wie sie durch Polymerisation von Tetrahydrofuran mittels kationischer Ringöffnung erhältlich sind.

Ebenfalls geeignete Polyetherpolyole sind Additionsprodukte von Styroloxid, Ethylenoxid, Propylenoxid, Butylenoxid und/oder Epichlorhydrin an di- oder polyfunktionelle Startermoleküle.

Geeignete Startermoleküle sind zum Beispiel Wasser, Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, 1,4-Butandiol, 1,6-Hexandiol sowie niedermolekulare, Hydroxylgruppen aufweisende Ester derartiger Polyole mit Dicarbonsäuren.

Es ist bevorzugt, dass das aliphatische Polyetherpolyol **A2a** eine Hydroxylzahl von ≥ 200 mg KOH/g bis ≤ 460 mg KOH/g (mehr bevorzugt ≥ 400 mg KOH/g bis ≤ 450 mg KOH/g) und durchschnittliche OH-Funktionalität von ≥ 1,8 bis ≤ 3,5 aufweist. Weiterhin liegt der Ethylenoxidgehalt dieses Polyols vorzugsweise bei ≥ 0 Massen-% bis ≤ 15 Massen-%, bezogen auf die Gesamtmasse von **A2a**.

Durch die erfindungsgemäß ausgewählten Hydroxylzahlen lässt sich das aliphatische Polyetherpolyol **A2a** als vergleichsweise kurzkettiges Polyol charakterisieren.

Ein bevorzugtes aliphatisches Polyetherpolyol **A2a** wird ferner aus der Umsetzung eines oder mehrerer zuckerhaltiger Startermoleküle mit Propylenoxid erhalten.

Bedingt durch den Wasseranteil in der Polyolformulierung wäre mit einer Versprödung des Schaumes zu rechnen. Um dem entgegenzuwirken, enthält die Formulierung ein in diesem technischen Gebiet unübliches Polyol. Hinsichtlich dieses weiteren aliphatischen Polyetherpolyols **A2b** lassen sich grundsätzlich dieselben Ausgangsmaterialien wie zum Polyetherpolyol **A2a** einsetzen. Es ist bevorzugt, dass dieses Polyetherpolyol **A2b** eine Hydroxylzahl von ≥ 20 mg KOH/g bis ≤ 120 mg KOH/g (mehr bevorzugt 25 mg KOH/g bis ≤ 145 mg KOH/g) und durchschnittliche OH-Funktionalität von ≥ 1,8 bis ≤ 3,5 aufweist. Weiterhin liegt der Ethylenoxidgehalt dieses Polyols vorzugsweise bei ≥ 0 Massen-% bis ≤ 40, bezogen auf die Gesamtmasse von **A2b**.

Durch die erfindungsgemäß ausgewählten Hydroxylzahlen lässt sich das aliphatische Polyetherpolyol **A2b** als vergleichsweise langkettiges Polyol charakterisieren.

Ein bevorzugtes weiteres aliphatisches Polyetherpolyol **A2b** wird aus der zweistufigen Umsetzung eines oder mehrerer zuckerhaltiger und/oder Glykol-Startermoleküle mit Ethylenoxid und Propylenoxid erhalten.

Da für Sprühanwendungen sehr schnelle Abbindezeiten gewünscht sind, sind im aliphatischen Polyetherpolyol **A2b** vorzugsweise mehr als 50% der OH-Gruppen primäre OH-Gruppen. Besonders bevorzugt ist, wenn mehr als 80% oder mehr als 90% der OH-Gruppen dieses Polyols primäre OH-Gruppen sind.

Beispiele für eine geeignete Isocyanatkomponente **B** sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (polymeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C₁ bis C₆-Alkylgruppen.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

Es ist möglich, dass das Isocyanat ein Prepolymer ist, welches erhältlich ist durch Reaktion eines Isocyanats mit einer NCO-Funktionalität von ≥ 2 und Polyolen mit einem Molekulargewicht von ≥ 62 g/mol bis ≤ 8000 g/mol und OH-Funktionalitäten von ≥ 1,5 bis ≤ 6.

Die Treibmittelkomponente **A3** umfasst Wasser vorzugsweise in einem Anteil von ≥ 99 Massen-% bis ≤ 100 Massen-%, bezogen auf die Gesamtmasse von **A3**. Wenn überhaupt nötig, können co-Treibmittel wie Kohlenwasserstoff-Treibmittel (insbesondere n-Pentan und Cyclopentan), halogenierte Kohlenwasserstoff-Treibmittel und Halogenalkan-Treibmittel in Betracht kommen. Geeignete Anteile der Treibmittelkomponente **A3** an der Isocyanat-reaktiven Komponente **A** insgesamt sind insbesondere ≥ 0,5 Gewichts-% bis ≤ 10 Gewichts-%, vorzugsweise ≥ 10 Gewichts-% bis ≤ 5 Gewichts-% und mehr bevorzugt ≥ 1,5 Gewichts-% bis ≤ 4 Gewichts-%.

Hinsichtlich der Katalysatorkomponente **A4** sind Beispiele für den Polyurethankatalysator **A4a** aminische Katalysatoren, insbesondere ausgewählt aus der Gruppe Triethylendiamin, N,N-Dimethylcyclohexylamin, Dicyclohexylmethylamin, Tetramethylendiamin, 1-Methyl-4-dimethylaminoethylpiperazin, Triethylamin, Tributylamin, Dimethylbenzylamin, N,N',N"-Tris-(dimethylaminopropyl)hexahydrotriazin, Tris-(dimethylaminopropyl)amin, Tris(dimethylaminomethyl)phenol, Dimethylaminopropylformamid, N,N,N',N'-Tetramethylethylendiamin, N,N,N',N'-Tetramethylbutandiamin, Tetramethylhexandiamin, Pentamethyldiethylentriamin, Pentamethyldipropylentriamin, Tetramethyldiaminoethylether, Dimethylpiperazin, 1,2-Dimethylimidazol, 1-Azabicyclo[3.3.0]octan, Bis-(dimethylaminopropyl)-harnstoff, N-Methylmorpholin, N-Ethylmorpholin, N-Cyclohexylmorpholin, 2,3-Dimethyl-3,4,5,6-tetrahydropyrimidin, Triethanolamin, Diethanolamin, Triisopropanolamin, N-Methyldiethanolamin, N-Ethyldiethanolamin und/oder Dimethylethanolamin.

Beispiele für den Polyisocyanuratkatalysator **A4b** sind Zinnverbindungen wie Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat und/oder Dioctylzinndiacetat, weiterhin Stickstoffheterozyklen wie Tris-(N,N-dimethylaminopropyl)-s-hexahydrotriazin, Hydroxide wie Tetramethylammoniumhydroxid und/oder Natriumhydroxid oder Carbonsäuresalze eines Alkalimetalls wie Natrium-N-[(2-hydroxy-5-Die Katalysatorkomponente **A4** kann den Katalysator **A4a** beispielsweise in einem Anteil von 5 Massen-% bis 50 Massen-% und den Katalysator **A4b** beispielsweise in einem Anteil von 95 Massen-% bis 50 Massen-%, jeweils bezogen auf die Gesamtmasse von **A4**, umfassen.

Die Isocyanat-reaktive Zusammensetzung **A** kann weiterhin Hilfs- und Zusatzstoffe umfassen, beispielsweise:
(v) wenigstens einen Schaumstabilisator, bevorzugt ein Polyethersiloxan, welches im Allgemeinen als ein Copolymerisat aus Ethylen- und/oder Propylenoxid aufgebaut und mit einem Polydimethylsiloxanrest Verbundmaterialen ist, und
(vi) wenigstens ein Flammschutzmittel, bevorzugt bromierte und/oder chlorierte Polyole oder Phosphorverbindungen (derartige Flammschutzmittel sind zum Beispiel im "Kunststoffhandbuch", Band 7 "Polyurethane", Kapitel 6.1 beschrieben; zum Beispiel die Ester der Orthophosphorsäure und der Metaphosphorsäure, die ebenfalls Halogene enthalten können; bevorzugt werden bei Raumtemperatur flüssige Flammschutzmittel eingesetzt).

Die Herstellung der erfindungsgemäßen PUR-/PIR-Hartschaumstoffe erfolgt vorzugsweise nach dem dem Fachmann bekannten Einstufenverfahren, bei dem die Reaktionskomponenten kontinuierlich oder diskontinuierlich miteinander zur Reaktion gebracht werden und dann in bzw. auf geeignete Formen/Substrate zur Aushärtung gebracht werden. Beispiele sind in USA-A 2 764 565, in G. Oertel (Hrsg.) "Kunststoff-Handbuch", Band VII, Carl Hanser Verlag, 3. Auflage, München 1993, S. 267 ff., sowie in K. Uhlig (Hrsg.) "Polyurethan Taschenbuch", Carl Hanser Verlag, 2. Auflage, Wien 2001, S. 83-102 beschrieben.

Weitere Aspekte und Ausführungsformen der vorliegenden Erfindung werden nachfolgend beschrieben. Sie können beliebig kombiniert werden, sofern sich nicht aus dem Zusammenhang eindeutig das Gegenteil ergibt.

Die Isocyanat-reaktive Zusammensetzung **A** umfasst zusätzlich einen Kettenverlängerer oder Vernetzer **A5** mit einer durchschnittlichen Funktionalität von ≥ 2 bis ≤ 4 und einer Hydroxylzahl (DIN 53240) von ≥ 600 mg KOH/g bis ≤ 2000 mg KOH/g. Vorzugsweise beträgt die OH-Zahl ≥ 640 mg KOH/g bis ≤ 700 mg KOH/g. Dieser Vernetzer kann sowohl OH- als auch NH₂- oder NH-Gruppen enthalten, wobei die OH-Zahl dann sinngemäß die aminischen H-Atome mit einschließt. Bevorzugte Kettenverlängerer oder Vernetzer **A5** sind Isophorondiamin, Hexamethylendiamin, Glyzerin, Butandiol, Ethylenglykol, Diethylenglykol, Propylenglykol, Ethylendiamin, Ethanolamin, Triethanolamin, Trimethylolpropan und Pentaerythrit. Durch den Vernetzer lässt sich die Thixotropie der Reaktionsmischung einstellen und so ein Abtropfen einer aufgetragenen, aber noch nicht ausgehärteten Mischung verhindern. Geeignete Anteile des Vernetzers **A5** in der Isocyanat-reaktiven Zusammensetzung A sind beispielsweise ≥ 1 Massen-%, bis ≤ 6 Massen-%, bezogen auf die Gesamtmasse von **A**.

In einer weiteren Ausführungsform ist die Treibmittelkomponente **A3** frei von Kohlenwasserstoff-Treibmitteln, halogenierten Kohlenwasserstoff-Treibmitteln und Halogenalkan-Treibmitteln. Der Begriff "frei von" schließt hierbei technisch unvermeidliche Spuren der genannten Treibmittel mit ein. Jedoch werden gemäß dieser Ausführungsform keine dieser Treibmittel bewusst hinzugefügt.

In einer weiteren Ausführungsform umfasst die Katalysatorkomponente ein tertiäres Amin, ein Carbonsäuresalz eines Alkalimetalls, ein Salz einer N-[(2-hydroxy-5-alkylphenyl)alkyl]-N-alkylaminocarbonsäure und einen Bis(dialkylamino)alkylether. Vorzugsweise handelt es sich hierbei um N,N-Dimethylcyclohexylamin, Kaliumacetat, Natrium-N-[(2-hydroxy-5-nonylphenyl)methyl]-N-methylaminoacetat und um Bis(dimethylamino)ethylether.

In einer weiteren Ausführungsform liegt das Massenverhältnis von **A1** : (**A2a + A2b)** zwischen ≥ 1 : 1 und ≤ 6 : 1 liegt und der Massenanteil der Summe aus **A1** und (**A2a + A2b)** zwischen ≥ 70 Massen-% und ≤ 85 Massen-%, bezogen auf die Gesamtmasse von **A**. Bevorzugt ist ein Massenverhältnis von 1,5 : 1 bis ≤ 4 : 1.

In einer weiteren Ausführungsform liegt das Massenverhältnis von **A2a : A2b** zwischen ≥ 0,3 : 1 und ≤ 3 : 1. Bevorzugt ist ein Massenverhältnis von 0,5 : 1 bis ≤ 2 : 1.

In einer weiteren Ausführungsform umfasst die Isocyanatkomponente **B** wenigstens ein Isocyanat, das ausgewählt ist aus der Gruppe:
2,2' -Methylendiphenyldiisocyanat, 2,4'-Methylendiphenyldiisocyanat, 4,4'-Methylendiphenyldiisocyanat, polynukleares Methylendiphenyldiisocyanat, 2,4-Toluylendiisocyanat, 2,6-Toluylendiisocyanat, Diisocyanatobenzol und/oder Naphthyldiisocyanat;
und/oder die Isocyanatkomponente **B** umfasst:
wenigstens ein NCO-terminiertes Präpolymer, erhältlich durch Reaktion wenigstens eines der vorstehend genannten Isocyanate mit wenigstens einem Polyol.

Unter den Isocyanaten ist polynukleares (polymeres) MDI bevorzugt. Hinsichtlich der Prepolymere sind die Polyole bevorzugt ausgewählt aus aliphatischen oder aromatischen Polyetherpolyolen mit jeweils 1 bis 4 Hydroxylgruppen oder aliphatischen oder aromatischen wenigstens ein NCO-terminiertes Präpolymer, erhältlich durch Reaktion wenigstens eines der vorstehend genannten Isocyanate mit wenigstens einem Polyol.

Unter den Isocyanaten ist polynukleares (polymeres) MDI bevorzugt. Hinsichtlich der Prepolymere sind die Polyole bevorzugt ausgewählt aus aliphatischen oder aromatischen Polyetherpolyolen mit jeweils 1 bis 4 Hydroxylgruppen oder aliphatischen oder aromatischen Polyesterpolyolen mit jeweils einer zahlengemittelten Molekülmasse zwischen ≥ 60 g/mol und ≤ 400 g/mol.

In einer weiteren Ausführungsform liegt der Isocyanat-Index (das molare Verhältnis von NCO-Gruppen zu NCO-reaktiven Gruppen multipliziert mit 100) zwischen ≥ 180 und ≤ 450. Bevorzugt ist ein Index von ≥ 200 und ≤ 400, mehr bevorzugt von ≥ 220 und ≤ 350.

In einer weiteren Ausführungsform werden die Isocyanat-reaktive Zusammensetzung A und die Isocyanatkomponente **B** auf ein Substrat versprüht. Mit eingeschlossen ist hierbei der Fall, dass eine Reaktionsmischung umfassend **A** und **B** auf das Substrat versprüht wird. Die Temperatur der Substratoberfläche kann dabei zum Beispiel in einem Bereich von ≥ 20 °C bis ≤ 70 °C, vorzugsweise von ≥ 30 °C bis ≤ 60 °C liegen. Nach dem Aufsprühen und Aushärten des Schaums können weitere Schichten auf den Schaum aufgetragen werden. Zum Beispiel kann auf ein so behandeltes Rohr noch eine Polyolefin-Deckschicht aufextrudiert werden.

Vorzugsweise ist das Substrat ein Rohr aus einem Material ausgewählt aus der Gruppe bestehend aus: Stahl, Edelstahl, Kupfer, Aluminium, Kunststoff und Beton.

Es ist ebenfalls bevorzugt, wenn während des Aufsprühens das Substrat rotiert wird. Hierbei kommt der besondere Vorteil des erfindungsgemäßen PUR-/PIR-Systems zum Tragen, welches so eingestellt werden kann, dass es nicht abtropft. Zweckmäßigerweise wird ein Rohr um seine Längsachse rotiert, so dass der gesamte Rohrumfang von einer statischen Sprühdüse erreicht wird. Selbstverständlich kann das Substrat, also beispielsweise das Rohr, auch während des Sprühens linear bewegt werden.

Ein weiterer Gegenstand der vorliegenden Erfindung ist ein Polyurethan-Polyisocyanurat-Hartschaumstoff, erhältlich nach einem erfindungsgemäßen Verfahren. Der Schaumstoff kann beispielsweise eine Dichte von ≥ 30 kg/m³ bis ≤ 70 kg/m³, vorzugsweise von ≥ 40 kg/m³ bis ≤ 60 kg/m³, aufweisen. Die Dichte lässt sich in einem vereinfachten Verfahren durch die Ermittlung der Masse eines Würfels von 10 cm Kantenlänge berechnen.

In einer Ausführungsform weist der Polyurethan-Polyisocyanurat-Hartschaumstoff eine Flammhöhe von ≤ 150 mm in einem Brandtest gemäß DIN EN ISO 11925-2 auf. Vorzugsweise beträgt die Flammhöhe ≤ 120 mm und mehr bevorzugt ≤ 100 mm.

Die Erfindung betrifft ebenfalls einen Rohr-Hartschaum-Verbundmaterial, erhältlich durch ein erfindungsgemäßes Verfahren. Das Rohr-Hartschaum-Verbundmaterial lässt sich einfach als ein durch den erfindungsgemäßen Schaum gedämmtes Rohr ansehen.

Schließlich betrifft die Erfindung auch die Verwendung eines erfindungsgemäßen Rohr-Hartschaum-Verbundmaterials zum Transport flüssiger oder gasförmiger Medien. Beispiele für solche Medien sind Wasserdampf in Fernwärme-Anwendungen, Erdgas und Erdöl.

### Beispiele:

Die vorliegende Erfindung wird anhand der nachfolgenden Beispiele weiter erläutert, ohne jedoch darauf beschränkt zu sein.

### Glossar:

| | |
|---|---|
| Polyol 1: | aromatisches Polyesterpolyol mit einer Hydroxylzahl von 240 mg KOH/g (DIN 53240), einer durchschnittlichen OH-Funktionalität von 2 und einer Viskosität von 15600 mPas bei 20 °C (BMS AG). Polykondensationsprodukt aus Adipinsäure, Phthalsäureanhydrid, Diethylenglykol und Ethylenglykol. |
| Polyol 2: | aromatisches Polyesterpolyol mit einer Hydroxylzahl von 210 mg KOH/g, (DIN 53240) einer durchschnittlichen OH-Funktionalität von 2 und einer Viskosität von 10450 mPas bei 20°C (BMS AG). Polykondensationsprodukt aus Adipinsäure, Phthalsäureanhydrid und Diethylenglykol. |
| Polyol 3: | Polyetherpolyol mit einer Hydroxylzahl von 440 mg KOH/g (DIN 53240), einer durchschnittlichen OH-Funktionalität von 2,8 und einer Viskosität von 440 mPas bei 25 °C (BMS AG). Erhalten aus der Umsetzung eines zuckerhaltigen und glykolhaltigen Startergemisches mit Propylenoxid. |
| Polyol 4: | Polyetherpolyol mit einer Hydroxylzahl von 28 mg KOH/g (DIN 53240), einer durchschnittlichen OH-Funktionalität von 2 und einer Viskosität von 860 mPas bei 25 °C (BMS AG). Erhalten aus der zweistufigen Umsetzung mehrerer Glykol-Startermoleküle mit Ethylenoxid und Propylenoxid. |
| Polyol 5: | Vernetzer mit einer Hydroxylzahl von 660 mg KOH/g (DIN 53240), einer durchschnittlichen Funktionalität von 2 und einer Viskosität von 18 mPas bei 20 °C (BMS AG) |
| TEP: | Triethylphosphat, Flammschutzmittel (Lanxess AG) |
| Tegostab B8461: | Schaumstabilisator (Evonik) |
| Desmorapid 1792: | N,N-Dimethylaminocyclohexan-Katalysator (BMS AG) |
| Desmorapid 726b: | Kaliumacetat-Katalysator (BMS AG) |
| Curithane 52: | Natrium-N-[(2-hydroxy-5-nonylphenyl)methyl]-N-methylaminoacetat (Air Products) |
| Polycat 41: | Tris(dimethylaminopropyl)-hexahydrotriazin-Katalysator (Air Products) |
| Niax Catalyst E-A-1: | Bis(dimethylamino)ethylether-Katalysator (Momentive) |
| Isocyanat: | polymeres MDI (Desmodur 44V20L, BMS AG) |

### Herstellung der PUR-/PIR-Schaumstoffe

Die 2-Komponenten Rezeptur aus einer Polyolformulierung und einem Isocyanat wurde über ein Sprühverfahren verarbeitet. Die Polyolformulierung und das Isocyanat wurden bei jeweils 35 °C vorgelegt. Beide Komponenten wurden über einen Hochdruckmischkopf zusammengeführt und auf ein rotierendes Rohr aufgesprüht. Die Temperatur an der Oberfläche des rotierenden Rohres betrug 50 °C. Die angegebenen Rohdichten wurden an einem 1000 cm³-Würfel (10 x 10 x 10 cm) durch Bestimmung der entsprechenden Masse ermittelt. Weitere Testverfahren waren: Druckfestigkeit (DIN EN 826), Offenzelligkeit (DIN ISO 4590-86), Torsion DIN EN ISO 6721-2), Erweichungspunkt (gemäß Torsionsprüfung nach DIN EN ISO 6721-2) und die Brandklasse (DIN EN ISO 111925-2). Subjektiv beurteilt wurden die Oberflächenqualität (auf einer Skala schlecht-mäßig-gut-sehr gut) und die Haftfestigkeit zum Stahlrohr (auf einer Skala schlecht-mäßig-gut-sehr gut).

Die Ergebnisse sind in der nachfolgenden Tabelle wiedergegeben.

| Beispiel | | 1 | 2 | 3 (Vergleich) |
|---|---|---|---|---|
| Polyol 1 | Gew.-Tle. | 57 | 57 | - |
| Polyol 2 | Gew.-Tle. | - | - | 57 |
| Polyol 3 | Gew.-Tle. | 13 | 13 | 13 |
| Polyol 4 | Gew.-Tle. | 13 | 13 | 13 |
| Polyol 5 | Gew.-Tle. | 4,7 | 4,7 | - |
| TEP | Gew.-Tle. | 13 | 13 | 13 |
| Wasser | Gew.-Tle. | 2,38 | 2,38 | 0,8 |
| Tegostab B8461 | Gew.-Tle. | 2 | 2 | 2 |
| Desmorapid 726b | Gew.-Tle. | 0,74 | 0,74 | - |
| Desmorapid 1792 | Gew.-Tle. | 1,50 | 2,50 | 1 |
| Curithane 52 | Gew.-Tle. | 3,96 | 3,96 | - |
| Niax Catalyst E-A-1 | Gew.-Tle. | 0,53 | 0,53 | - |
| Polycat 41 | Gew.-Tle. | - | - | 0,5 |
| Cyclopentan | Gew.-Tle. | - | - | 6 |
| Isocyanat | Gew.-Tle. | 230 | 230 | 183 |
| Kennzahl | NCO/OH | 260 | 256 | 320 |
| Dichte | kg/m³ | 55 | 57 | 62 |
| Oberflächenqualität | | mäßig | gut | gut |
| Druckfestigkeit axial | MPa | 0,26 | 0,32 | 0,25 |
| Druckfestigkeit radial | MPa | 0,36 | 0,45 | 0,53 |
| Offenzelligkeit | % | 5 | 4 | 4 |
| Erweichungspunkt | °C | 255 | 260 | 225 |
| Haftung | | gut | sehr gut | sehr gut |
| Brandklasse | | B2 | B2 | B2 |

Die Tabelle zeigt zwei erfindungsgemäße Rezepturen, die sich im Anteil des PIR-Katalysators Desmorapid 1792 unterscheiden. Anhand des Erweichungspunktes lässt sich nachweisen, dass der PIR-Anteil in Beispiel 2 erwartungsgemäß etwas höher ausfällt als in Beispiel 1. Diese Gesamtkatalyse liefert nun überraschenderweise in Beispiel 2 eine überaus homogene Oberfläche. Beispiel 3 stellt ein Vergleichsbeispiel repräsentativ für den aktuellen Stand der Technik dar. Hier wurde eine äquivalente PUR-/PIR-Rezeptur mittels derselben Sprühtechnologie verarbeitet, wobei in diesem Falle das physikalische Treibmittel Cyclopentan eingesetzt worden ist. Die Kennzahl ist hier im Vergleich zu Beispiel 1 und 2 höher. Umso überraschender ist die Tatsache, dass die mechanischen Eigenschaften des PUR-/PIR-Hartschaums gemäß Beispiel 2 gut vergleichbar sind mit denen des Schaums gemäß Beispiel 3. Gleichzeitig liegt der Erweichungspunkt im Vergleichsbeispiel 3 bereits bei 225 °C, wohingegen der Erweichungspunkt bei den beiden PUR-/PIR-Hartschäumen gemäß Beispiel 1 und 2 trotz der deutlich geringeren Kennzahl erst bei 255 °C beziehungsweise 260 °C zu finden ist.

## Patentansprüche

1. Verfahren zur Herstellung eines Polyurethan-Polyisocyanurat-Hartschaumstoffs **C** aus einer Isocyanat-reaktiven Zusammensetzung **A** und einer Isocyanatkomponente **B**, wobei die Isocyanat-reaktive Zusammensetzung **A** umfasst:
(i) ein aromatisches Polyesterpolyol **A1** mit einer Hydroxylzahl von ≥ 100 mg KOH/g bis ≤ 350 mg KOH/g, einer durchschnittlichen OH-Funktionalität von ≥ 1,8 bis ≤ 6,5,
(ii) ein aliphatisches Polyetherpolyol **A2a** mit einer Hydroxylzahl von ≥ 150 mg KOH/g bis ≤ 500 mg KOH/g, einer durchschnittlichen OH-Funktionalität von ≥ 1,5 bis ≤ 5,5 und einem Ethylenoxid-Gehalt von ≥ 0 Massen-% bis ≤ 50 Massen-%, bezogen auf die Gesamtmasse von **A2a** und
ein weiteres aliphatisches Polyetherpolyol **A2b** mit einer Hydroxylzahl von ≥ 15 mg KOH/g bis ≤ 150 mg KOH/g, einer durchschnittlichen OH-Funktionalität von ≥ 1,5 bis ≤ 5,5 und einem Ethylenoxid-Gehalt von ≥ 0 Massen-% bis ≤ 50 Massen-%, bezogen auf die Gesamtmasse von **A2b**,
(iii) eine Treibmittelkomponente **A3** umfassend Wasser in einem Anteil von ≥ 90 Massen-% bis ≤ 100 Massen-%, bezogen auf die Gesamtmasse von **A3**,
(iv) eine Katalysatorkomponente **A4** umfassend einen Katalysator **A4a** zur Katalyse der Polyurethanbildung und einen Katalysator **A4b** zur Katalyse der Polyisocyanuratbildung,
mit einem Anteil des Katalysators **A4a** von ≥ 5 Massen-% bis ≤ 50 Massen-% und einem Anteil von Katalysator **A4b** von ≥ 50 Massen-% bis ≤ 95 Massen-% bezogen auf die Gesamtmasse von **A4**, und
(v) einen Kettenverlängerer oder Vernetzer **A5** mit einer durchschnittlichen Funktionalität von ≥ 2 bis ≤ 4 und einer Hydroxylzahl von ≥ 600 mg KOH/g bis ≤ 2000 mg KOH/g.

2. Verfahren nach Anspruch 1, bei dem die Treibmittelkomponente **A3** frei von Kohlenwasserstoff-Treibmitteln, halogenierten Kohlenwasserstoff-Treibmitteln und Halogenalkan-Treibmitteln ist.

3. Verfahren nach einem der Ansprüche 1 oder 2, bei dem die Katalysatorkomponente ein tertiäres Amin, ein Carbonsäuresalz eines Alkalimetalls, ein Salz einer N-[(2-hydroxy-5-alkylphenyl)alkyl]-N-alkylaminocarbonsäure und einen Bis(dialkylamino)alkylether umfasst.

4. Verfahren nach einem der Ansprüche 1 bis 3, bei dem das Massenverhältnis von **A1** : **(A2a** + **A2b)** zwischen ≥ 1 : 1 und ≤ 6 : 1 liegt und der Massenanteil der Summe aus **A1** und **(A2** + **A2b)** zwischen ≥ 70 Massen-% und ≤ 85 Massen-%, bezogen auf die Gesamtmasse von **A**, liegt.

5. Verfahren nach einem der Ansprüche 1 bis 4, bei dem das Massenverhältnis von **A2a** : **A2b** zwischen ≥ 0,3 : 1 und ≤ 3 : 1 liegt.

6. Verfahren nach einem der Ansprüche 1 bis 5, bei dem die die Isocyanatkomponente **B** wenigstens ein Isocyanat umfasst, das ausgewählt ist aus der Gruppe:
2,2'-Methylendiphenyldiisocyanat, 2,4'-Methylendiphenyldiisocyanat, 4,4'-Methylendiphenyldiisocyanat, polynukleares Methylendiphenyldiisocyanat, 2,4-Toluylendiisocyanat, 2,6-Toluylendiisocyanat, Diisocyanatobenzol und/oder Naphthyldiisocyanat;
und/oder die Isocyanatkomponente **B** umfasst:
wenigstens ein NCO-terminiertes Präpolymer, erhältlich durch Reaktion wenigstens eines der vorstehend genannten Isocyanate mit wenigstens einem Polyol.

7. Verfahren nach einem der Ansprüche 1 bis 6, bei dem der Isocyanat-Index zwischen ≥ 180 und ≤ 450 liegt.

8. Verfahren nach einem der Ansprüche 1 bis 7, bei dem die Isocyanat-reaktive Zusammensetzung **A** und die Isocyanatkomponente **B** auf ein Substrat versprüht werden.

9. Verfahren nach Anspruch 8, bei dem das Substrat ein Rohr aus einem Material ausgewählt aus der Gruppe bestehend aus: Stahl, Edelstahl, Kupfer, Aluminium, Kunststoff und Beton ist.

10. Verfahren nach Anspruch 8 oder 9, bei dem während des Aufsprühens das Substrat rotiert wird.

11. Polyurethan-Polyisocyanurat-Hartschaumstoff, erhältlich nach einem Verfahren nach einem der Ansprüche 1 bis 7.

12. Polyurethan-Polyisocyanurat-Hartschaumstoff nach Anspruch 11 mit einer Flammhöhe von ≤ 150 mm in einem Brandtest gemäß DIN EN ISO 11925-2.

13. Rohr-Hartschaum-Verbundmaterial, erhältlich durch ein Verfahren nach einem der Ansprüche 9 bis 10.

14. Verwendung eines Rohr-Hartschaum-Verbundmaterials nach Anspruch 13 zum Transport flüssiger oder gasförmiger Medien.

## Claims

1. Method of producing a rigid polyurethane-polyisocyanurate foam **C** from an isocyanate-reactive composition **A** and an isocyanate component **B**, wherein said isocyanate-reactive composition **A** comprises:
(i) an aromatic polyester polyol **A1** having a hydroxyl number of ≥ 100 mg KOH/g to 350 mg KOH/g, an average OH functionality of ≥ 1.8 to ≤ 6.5,
(ii) an aliphatic polyether polyol **A2a** having a hydroxyl number of ≥ 150 mg KOH/g to ≤ 500 mg KOH/g, an average OH functionality of ≥ 1.5 to ≤ 5.5 and an ethylene oxide content of ≥ 0% by mass to ≤ 50% by mass, based on the overall mass of **A2a,** and
a further aliphatic polyether polyol **A2b** having a hydroxyl number of ≥ 15 mg KOH/g to ≤ 150 mg KOH/g, an average OH functionality of ≥ 1.5 to ≤ 5.5 and an ethylene oxide content of ≥ 0% by mass to ≤ 50% by mass, based on the overall mass of **A2b,**
(iii)a blowing agent component **A3** comprising water in a proportion of ≥ 90% by mass to ≤ 100% by mass, based on the overall mass of **A3,**
(iv) a catalyst component **A4** comprising a catalyst **A4a** to catalyze polyurethane formation and a catalyst **A4b** to catalyze polyisocyanurate formation,
with a proportion of the catalyst **A4a** of ≥ 5% by mass to ≤ 50% by mass and a proportion of catalyst **A4b** of ≥ 50% by mass to ≤ 95% by mass based on the total mass of **A4,** and
(v) a chain extender or crosslinker **A5** having an average functionality of ≥ 2 to ≤ 4 and a hydroxyl number of ≥ 600 mg KOH/g to ≤ 2000 mg KOH/g.

2. Method according to Claim 1 wherein said blowing agent component **A3** is free from hydrocarbon blowing agents, halogenated hydrocarbon blowing agents and haloalkane blowing agents.

3. Method according to either of Claims 1 and 2 wherein the catalyst component comprises a tertiary amine, a carboxylic acid salt of an alkali metal, a salt of an N-[(2-hydroxy-5-alkylphenyl)alkyl]-N-alkylamino carboxylic acid and a bis(dialkylamino)alkyl ether.

4. Method according to any of Claims 1 to 3 wherein the mass ratio of **A1 : (A2a + A2b)** is between ≥ 1 : 1 and ≤ 6 : 1 and the mass fraction of the sum total of **A1** and (**A2** + **A2b)** is between ≥ 70% by mass and ≤ 85% by mass, based on the overall mass of **A.**

5. Method according to any of Claims 1 to 4 wherein the mass ratio of **A2a** : **A2b** is between ≥ 0.3 : 1 and ≤ 3 : 1.

6. Method according to any of Claims 1 to 5 wherein said isocyanate component **B** comprises at least one isocyanate selected from the group:
2,2'-methylenediphenyl diisocyanate, 2,4'-methylenediphenyl diisocyanate, 4,4'-methylenediphenyl diisocyanate, polynuclear methylenediphenyl diisocyanate, 2,4-toluylene diisocyanate, 2,6-toluylene diisocyanate, diisocyanatobenzene and/or naphthyl diisocyanate;
and/or said isocyanate component **B** comprises:
at least one NCO-terminated prepolymer obtainable by reacting at least one of the aforementioned isocyanates with at least one polyol.

7. Method according to any of Claims 1 to 6 wherein the isocyanate index is between ≥ 180 and ≤ 450.

8. Method according to any of Claims 1 to 7 wherein said isocyanate-reactive composition **A** and said isocyanate component **B** are sprayed onto a substrate.

9. Method according to Claim 8 wherein the substrate is a pipe composed of a material selected from the group consisting of: steel, stainless steel, copper, aluminium, plastic and concrete.

10. Method according to Claim 8 or 9 wherein the substrate is rotated during spraying.

11. Rigid polyurethane-polyisocyanurate foam obtainable according to a method according to any of Claims 1 to 7.

12. Rigid polyurethane-polyisocyanurate foam according to Claim 11 having a flame height of ≤ 150 mm in a DIN EN ISO 11925-2 fire test.

13. Pipe/rigid foam composite material obtainable by a method according to either of Claims 9 and 10.

14. Use of a pipe/rigid foam composite material as claimed in Claim 13 to transport liquid or gaseous media.

## Revendications

1. Procédé pour la préparation d'une mousse dure **C** de polyuréthane-polyisocyanurate à partir d'une composition **A** réactive envers isocyanate et d'un composant **B** d'isocyanate, la composition **A** réactive envers isocyanate comprenant :
(i) un polyesterpolyol aromatique **A1** doté d'un indice d'hydroxyle de ≥ 100 mg KOH/g à ≤ 350 mg KOH/g, d'une fonctionnalité moyenne d'OH de ≥ 1,8 à ≤ 6, 5,
(ii) un polyétherpolyol aliphatique **A2a** doté d'un indice d'hydroxyle de ≥ 150 mg KOH/g à ≤ 500 mg KOH/g, d'une fonctionnalité moyenne d'OH de ≥ 1,5 à ≤ 5,5, et d'une teneur en oxyde d'éthylène de ≥ 0 % en masse à ≤ 50 % en masse, par rapport à la masse totale de **A2a** et
un polyétherpolyol aliphatique supplémentaire **A2b** doté d'un indice d'hydroxyle de ≥ 15 mg KOH/g à ≤ 150 mg KOH/g, d'une fonctionnalité moyenne d'OH de ≥ 1,5 à ≤ 5,5, et d'une teneur en oxyde d'éthylène de ≥ 0 % en masse à ≤ 50 % en masse, par rapport à la masse totale de **A2b,**
(iii) un composant de type propulseur **A3** comprenant de l'eau en une proportion de ≥ 90 % en masse à ≤ 100 % en masse, par rapport à la masse totale de **A3,**
(iv) un composant de type catalyseur **A4** comprenant un catalyseur **A4a** pour la catalyse de la formation de polyuréthane et un catalyseur **A4b** pour la catalyse de la formation de polyisocyanurate,
doté d'une proportion du catalyseur **A4a** de ≥ 5 % en masse à ≤ 50 % en masse et d'une proportion du catalyseur **A4b** de ≥ 50 % en masse à ≤ 95 % en masse par rapport à la masse totale de **A4,** et
(v) un extenseur de chaînes ou un agent de réticulation **A5** doté d'une fonctionnalité moyenne de ≥ 2 à ≤ 4 et d'un indice d'hydroxyle de ≥ 600 mg KOH/g à ≤ 2000 mg KOH/g.

2. Procédé selon la revendication 1, dans lequel le composant de type propulseur **A3** est exempt de propulseurs de type hydrocarbure, de propulseurs de type hydrocarbure halogénés et de propulseurs de type halogénoalcane.

3. Procédé selon l'une quelconque des revendications 1 et 2, dans lequel le composant de type catalyseur comprend une amine tertiaire, un sel d'acide carboxylique d'un métal alcalin, un sel d'un acide N-[(2-hydroxy-5-alkylphényl)alkyl]-N-alkylaminocarboxylique et un bis(dialkylamino)alkyléther.

4. Procédé selon l'une quelconque des revendications 1 à 3, dans lequel le rapport en masse de **A1:** (**A2a** + **A2b**) se situe entre ≥ 1:1 et ≤ 6:1 et la proportion en poids de la somme de **A1** et (**A2** + **A2b**) se situe entre ≥ 70 % en masse et ≤ 85 % en masse, par rapport à la masse totale de **A**.

5. Procédé selon l'une quelconque des revendications 1 à 4, dans lequel le rapport en masse de **A2a:A2b** se situe entre ≥ 0,3:1 et ≤ 3:1.

6. Procédé selon l'une quelconque des revendications 1 à 5, dans lequel le composant **B** de type isocyanate comprend au moins un isocyanate, qui est choisi dans le groupe :
2,2'-diisocyanate de diphénylméthylène, 2,4'-diisocyanate de diphénylméthylène, 4,4'-diisocyanate de diphénylméthylène, un diisocyanate de diphénylméthylène polynucléaire, 2,4-diisocyanate de toluylène, 2,6-diisocyanate de toluylène, un diisocyanatobenzène et/ou un diisocyanate de naphtyle ;
et/ou le composant **B** de type isocyanate comprend :
au moins un prépolymère terminé par NCO pouvant être obtenu par la réaction d'au moins un des isocyanates mentionnés précédemment avec au moins un polyol.

7. Procédé selon l'une quelconque des revendications 1 à 6, dans lequel l'indice d'isocyanate se situe entre ≥ 180 et ≤ 450.

8. Procédé selon l'une quelconque des revendications 1 à 7, dans lequel la composition **A** réactive envers isocyanate et le composant **B** de type isocyanate sont pulvérisés sur un substrat.

9. Procédé selon la revendication 8, dans lequel le substrat est un tuyau composé d'un matériau choisi dans le groupe constitué par : l'acier, l'acier inoxydable, le cuivre, l'aluminium, le plastique et le béton.

10. Procédé selon la revendication 8 ou 9, dans lequel le substrat est mis en rotation pendant la pulvérisation.

11. Mousse dure de polyuréthane-polyisocyanurate pouvant être obtenue par un procédé selon l'une quelconque des revendications 1 à 7.

12. Mousse dure de polyuréthane-polyisocyanurate selon la revendication 11 dotée d'une hauteur de flamme ≤ 150 mm dans un test d'incendie selon la norme DIN EN ISO 11925-2.

13. Matériau composite tuyau-mousse dure pouvant être obtenu par un procédé selon l'une quelconque des revendications 9 et 10.

14. Utilisation d'un matériau composite tuyau-mousse dure selon la revendication 13 pour le transport de milieux liquides ou gazeux.
